## Europäisches Patentamt

## European Patent Office

## Office européen des brevets

(19)

(11) Veröffentlichungsnummer: **0 075 718**
**B1**

(12)

# EUROPÄISCHE PATENTSCHRIFT

(45) Veröffentlichungstag der Patentschrift:
27.03.85

(51) Int. Cl.⁴: **G 02 B 21/34**

(21) Anmeldenummer: **82107527.2**

(22) Anmeldetag: **18.08.82**

(54) **Objekthalter für Mikroskope.**

(30) Priorität: **29.09.81 DE 3138654**

(43) Veröffentlichungstag der Anmeldung:
**06.04.83 Patentblatt 83/14**

(45) Bekanntmachung des Hinweises auf die Patenterteilung:
**27.03.85 Patentblatt 85/13**

(84) Benannte Vertragsstaaten:
**AT CH DE FR GB LI SE**

(56) Entgegenhaltungen:
**DE - A - 3 110 366**
**US - A - 3 951 512**

(73) Patentinhaber: **Firma Carl Zeiss, D-7920 Heidenheim (Brenz) (DE)**

(72) Erfinder: **Weber, Klaus, Dr., Baumgartenweg 22, D-7923 Königsbronn (DE)**
Erfinder: **Gerber, Siegfried, Kopernikusstrasse 1, D-7082 Oberkochen (DE)**
Erfinder: **Fischer, Horst, Fahrbachstrasse 232, D-7080 Aalen (DE)**

BUNDESDRUCKEREI BERLIN

## Beschreibung

Die Erfindung betrifft einen Objekthalter für Mikroskope, in dem Objektträger durch Federkraft mit der Stirnseite gegen feste Anlagen geklemmt werden. Die bisher verwendeten Objekthalter der eingangs genannten Bauart besitzen einen federnden Hebel, der die auf dem Tisch des Mikroskops aufliegenden, in der Regel rechteckigen Objektträger sichelförmig umfaßt, an einer Ecke berührt und an gegenüberliegende Anlagepunkte am Objekthalter drückt. Solche Objekthalter sind beispielsweise in der DE-A-2 218 156 und dem DE-U-3 103 057 beschrieben.

Mit derartigen, einfachen Objekthaltern lassen sich Objekte auch unterschiedlicher Abmessungen sicher halten, nachteilig ist jedoch, daß der Hebel vom Benutzer beim Probenwechsel mit einer Hand zurückgezogen werden muß während die zweite Hand den Objektträger führt. Insbesondere bei Arbeiten, die ein häufiges Wechseln der Objektträger erfordern, macht sich der Umstand, daß beide Hände beim Probenwechsel benötigt werden, für den Benutzer nachteilig bemerkbar. Da bei diesen Arbeiten in der Regel standardisierte Objektträger benutzt werden, läßt sich der eingangs genannte Vorteil des bekannten Objekthalters, die Möglichkeit zur Halterung von Objekten mit unterschiedlichen Abmessungen, nicht immer nutzen.

Aus der DE-A-2 946 544 (Fig. 3) ist ein Objekthalter für Standardobjekte bekannt, der eine Einhandbedienung beim Objektwechsel ermöglicht. Er besteht aus einer schubladenförmigen Aufnahme, die darin eingelegte Objektträger beim Einschieben an eine Unterkante des Objekthalters anlegt. Dieser Objekthalter verdeckt notwendigerweise Randbereiche der Oberfläche des Objektträgers.

Die Anmelderin hat sich unter Bezugnahme auf die ältere nationale Anmeldung DE-OS 31 10 366 freiwillig eingeschränkt und gesonderte Patentansprüche für den Vertragsstaat Bundesrepublik Deutschland vorgelegt.

Es ist die Aufgabe der vorliegenden Erfindung, einen einfach aufgebauten Objekthalter für Standardobjektträger zu schaffen, der die gesamte Oberfläche des Objektträgers freigibt und einen einhändigen Probenwechsel erlaubt.

Ausgehend von einem Halter der eingangs genannten Art wird diese Aufgabe durch die im Kennzeichen des Anspruchs 1 angegebenen Maßnahmen gelöst.

Die erfindungsgemäßen Objekthalter vereinigen die vorstehend aufgabenhaft formulierten Vorteile und eignen sich daher besonders für die Verwendung bei Routineuntersuchungen.

Die federnde Scheibe der Ausführungsform der Erfindung gemäß Anspruch 2 ist vorzugsweise in einer Langlochführung drehbar gelagert, weil dadurch die Reibung beim Einführen des Objektträgers verringert und damit ein Klemmen scharfkantiger Objektträger vermieden wird.

Die Haltekraft der Scheibe kann sehr einfach durch einen tangential an den Außenumfang der Scheibe oder ihre Drehachse angelegte Drahtfeder aufgebracht werden.

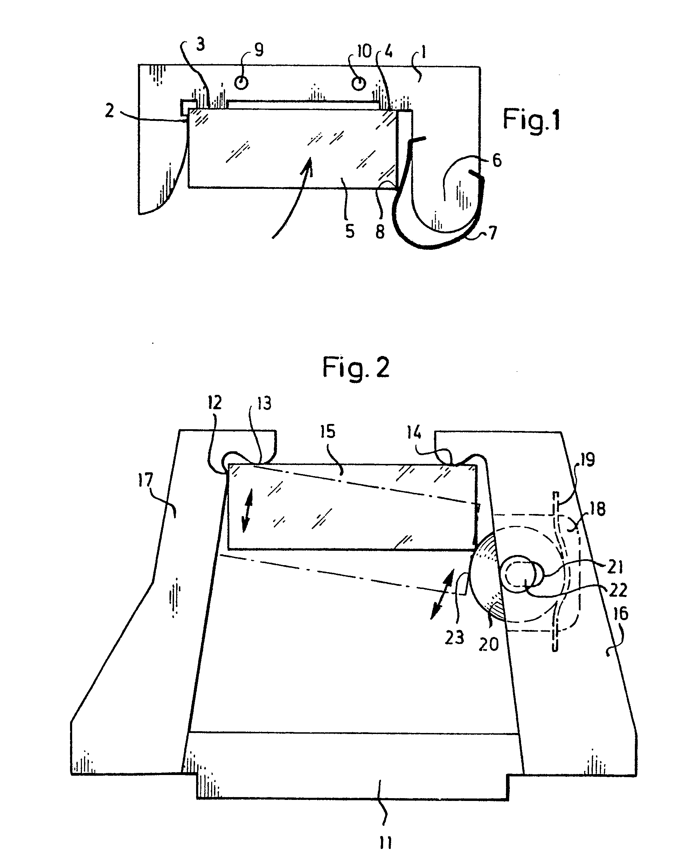

Nachfolgend werden zwei Ausführungsbeispiele der Erfindung anhand der Fig. 1 und 2 der Zeichnungen näher erläutert:

Die in Fig. 1 in Aufsicht dargestellte erste Ausführungsform des Objekthalters besteht aus einer U-förmigen Platte 1, die drei Anlagepunkte 2, 3, 4 für den transparenten Objektträger 5 besitzt. Die Platte 1 besitzt zwei Bohrungen 9 und 10, die zur Befestigung des Objekthalters auf dem Tisch eines Mikroskops dienen.

Um den Schenkel 6 der Platte 1 ist eine Bandfeder 7 gelegt und mit beiden Enden im Objektträger so verankert, daß ein zusammendrückbarer Zwischenraum zwischen der Bandfeder 7 und der Innenseite des Schenkels 6 entsteht. Die Bandfeder 7 und die Platte 1 besitzen etwa die gleiche Höhe (Dicke) wie der Objektträger 5.

Beim Einführen des Objektträgers 5 gleitet dessen Kante 8 an der Bandfeder 7, drückt diese beiseite und wird nach Überwindung eines sich aus Bandfeder- und Probengeometrie ergebenen Druckpunktes von der Bandfeder gegen die Anlagepunkte 2 bis 4 geklemmt.

In einer weiteren Ausführungsform kann der Objekthalter so abgewandelt werden, daß der Schenkel 6 die Form der durch die Bandfeder 7 umschlossenen Fläche erhält und im Ganzen federnd um ein in der Platte 1 angeordnetes Drehlager schwenkbar ist. Es ist dann ein Anschlag zur Begrenzung der Drehbewegung des Schenkels vorzusehen, der dafür sorgt, daß in den so modifizierten Halter eingeschobene Objektträger den Hebel ein konvex geformten Anlagebereich im wesentlichen tangential berühren und dann gegen Federkraft beiseite drücken.

Der Objektträger nach der in Fig. 2 skizzierten, alternativen Ausführungsform besitzt eine Grundplatte 11, auf die zwei gegenüberliegende Leisten 16, 17 aufgesetzt sind, deren Enden zu Anlagepunkten 12, 13, 14 für die Stirnseiten des Objektträgers 15 ausgebildet sind. In Zuführungsrichtung verengt sich die von den Leisten 16, 17 eingeschlossenen Fläche. Der Objekthalter wird über die Grundplatte 11 am Tisch eines Mikroskops befestigt.

In einem auf der der Leiste 17 zugewandten Seite offenen Hohlraum 18 in der Leiste 16 befindet sich eine Scheibe 20. Diese Scheibe 20 trägt einen zentrischen Zapfen 22, der in einem Langloch in der Leiste 16 geführt ist. Eine Drahtfeder 19 drückt die Scheibe 20 in Richtung auf die Leiste 17.

Bei der Probenzuführung berührt der entlang der Leiste 17 gleitende Objektträger 15 die Scheibe 20 tangential und schiebt sie mit seiner Stirnseite 23 gegen den Druck der Feder 19 bei der anschließenden Drehbewegung um den Anschlagpunkt 13 etwas zurück. Dabei rollt die Stirnseite 23 des Objektträgers 5 an der Scheibe 20 ab. Nach dem Überschreiten eines fühlbaren Druckpunktes klemmt die Scheibe 20 den Objektträger 15 gegen den Anlagepunkt 14.

### Patentansprüche für die Vertragsstaaten: AT, CH, FR, GB, Li, SE

1. Objekthalter für Mikroskope, in dem Objektträger für mikroskopische Objekte (5; 15) durch federnde Halteelemente (7; 20) mit der Stirnseite gegen feste Anlagen (2, 3, 4; 12, 13, 14) geklemmt werden, dadurch gekennzeichnet, daß die Halteelemente so gestaltet sind, daß sie bei der Zuführung des Objektträgers (5; 15) in Richtung auf die Anlagen (2, 3, 4; 12, 13, 14) entgegen der Federkraft zur Seite bewegt werden.

2. Objekthalter nach Anspruch 1, dadurch gekennzeichnet, daß die Klemmung durch eine Scheibe (20) erfolgt, die gegen Federkraft (14) beweglich so im Objekthalter (11, 16, 17) gelagert ist, daß in Richtung auf die Anlagen (12, 13, 14) eingeschobene Objektträger (15) die Scheibe (20) im wesentlichen tangential berühren.

3. Objekthalter nach Anspruch 2, dadurch gekennzeichnet, daß die Scheibe (20) in einer Langlochführung (21) drehbar gelagert ist.

4. Objekthalter nach Anspruch 1—3, dadurch gekennzeichnet, daß die Scheibe (20) durch eine tangential an ihren Außenumfang oder ihre Drehachse angelegte Drahtfeder (19) gegen die Objektträger (15) gedrückt wird.

5. Objekthalter nach Anspruch 1, dadurch gekennzeichnet, daß die Klemmung durch eine gegen das Objekt konvex gebogene Bandfeder (7) erfolgt, die mit mindestens einem ihrer Enden so am Objekthalter befestigt ist, daß in Richtung auf die Anlagen (2, 3, 4) eingeschobene Objektträger (5) die Bandfeder (7) im wesentlichen tangential berühren.

6. Objekthalter nach Anspruch 1, dadurch gekennzeichnet, daß die Klemmung durch einen im Anlagebereich gegen das Objekt konvex gebogenen, federnden Hebel erfolgt, dessen Bewegungsbereich durch einen Anschlag derart begrenzt ist, daß in Richtung auf die Anlagen eingeschobene Objektträger den Hebel im wesentlichen tangential berühren.

### Patentansprüche für den Vertragsstaat: DE

1. Objekthalter für Mikroskope, in dem Objektträger für mikroskopische Objekte (5; 15) durch federnde Halteelemente (7; 20) mit der Stirnseite gegen feste Anlagen (2, 3, 4; 12, 13, 14) geklemmt werden, wobei die Halteelemente so gestaltet sind, daß sie bei der Zuführung des Objektträgers (5; 15) in Richtung auf die Anlagen (2, 3, 4; 12, 13, 14) entgegen der Federkraft zur Seite bewegt werden, dadurch gekennzeichnet, daß die Klemmung durch eine Scheibe (20) erfolgt, die gegen Federkraft (14) beweglich so im Objekthalter (11, 16, 17) gelagert ist, daß in Richtung auf die Anlagen (12, 13, 14) eingeschobene Objektträger (15) die Scheibe (20) im wesentlichen tangential berühren.

2. Objekthalter nach Anspruch 1, dadurch gekennzeichnet, daß die Scheibe (20) in einer Langlochführung (21) drehbar gelagert ist.

3. Objekthalter nach Anspruch 1—2, dadurch gekennzeichnet, daß die Scheibe (20) durch eine tangential an ihren Außenumfang oder ihre Drehachse angelegte Drahtfeder (19) gegen die Objektträger (15) gedrückt wird.

4. Objekthalter für Mikroskope, in dem Objektträger für mikroskopische Objekte (5; 15) durch federnde Halteelemente (7; 20) mit der Stirnseite gegen feste Anlagen (2, 3, 4; 12, 13, 14) geklemmt werden, wobei die Halteelemente so gestaltet sind, daß sie bei der Zuführung des Objektträgers (5; 15) in Richtung auf die Anlagen (2, 3, 4; 12, 13, 14) entgegen der Federkraft zur Seite bewegt werden, dadurch gekennzeichnet, daß die Klemmung durch eine gegen das Objekt konvex gebogene Bandfeder (7) erfolgt, die mit mindestens einem ihrer Enden so am Objekthalter befestigt ist, daß in Richtung auf die Anlagen (2, 3, 4) eingeschobene Objektträger (5) die Bandfeder (7) im wesentlichen tangential berühren.

### Claims for the Contracting States: AT, CH, FR, GB, Li, SE

1. A specimen holder for microscopes in which specimen slides for microscope objects (5; 15) are clamped by spring-loaded holding elements (7; 20) at their front edge against fixed stops (2, 3, 4; 12, 13, 14), characterized by the fact that the holding elements are so developed that upon insertion of a specimen slide (5; 15) in the direction towards the stops (2, 3, 4; 12, 13, 14) they are laterally displaced by the slide against the spring load.

2. A specimen holder according to claim 1, characterized by the fact that the clamping is effected by a disc (20) which is supported for movement against spring load (14) in the specimen holder (11, 16, 17) in such manner that specimen slides (15) inserted in the direction towards the stops (12, 13, 14) contact the disc (20) substantially tangentially.

3. A specimen holder according to claim 2, characterized by the fact that the disc (20) is supported for rotation in a slot guide (21).

4. A specimen holder according to claims 1 to 3, characterized by the fact that the disc is pressed against the specimen slide (15) by a wire spring (19) which is applied tangentially to the outer circumference or to the pivot shaft of the disc.

5. A specimen holder according to claim 1, characterized by the fact that clamping is effected by a spring band (7) which is bent convexly towards the object and so fastened at at least one of its ends to the specimen holder that specimen slides (5) inserted in the direction towards the stops (2, 3, 4) contact the spring band (7) substantially tangentially.

6. A specimen holder according to claim 1, characterized by the fact that the clamping is effected by a spring lever which is convexly curved towards the object in the region of application and the range of movement of which is so limited by a stop that specimen slides inserted in the direction toward the stops contact the lever substantially tangentially.

## Claims for the Contracting State: DE

1. A specimen holder for microscopes in which specimen slides for microscope objects (5; 15) are clamped by spring-loaded holding elements (7; 20) at their front edge against fixed stops (2, 3, 4; 12, 13, 14) whereas the holding elements are so developed that upon insertion of a specimen slide (5; 15) in the direction towards the stops (2, 3, 4; 12, 13, 14) they are laterally displaced by the slide against the spring load, characterized by the fact that that the clamping is effected by a disc (20) which is supported for movement against spring load (14) in the specimen holder (11, 16, 17) in such manner that specimen slides (15) inserted in the direction towards the stops (12, 13, 14) contact the disc (20) substantially tangentially.

2. A specimen holder according to claim 2, characterized by the fact that the disc (20) is supported for rotation in a slot guide (21).

3. A specimen holder according to claims 1 to 3, characterized by the fact that the disc is pressed against the specimen slides (15) by a wire spring (19) which is applied tangentially to the outer circumference or to the pivot shaft of the disc.

4. A specimen holder for microscopes in which specimen slides for microscopes objects (5; 15) are clamped by spring-loaded holding elements (7; 20) at their front edge against fixed stops (2, 3, 4; 12, 13, 14) whereas the holding elements are so developed that upon insertion of a specimen slide (5; 15) in the direction towards the stops (2, 3, 4; 12, 13, 14) they are laterally displaced by the slide against the spring load, characterized by the fact that clamping is effected by a spring band (7) which is bent convexly towards the object and so fastened at at least one of its ends to the specimen holder that specimen slides (5) inserted in the direction towards the stops (2, 3, 4) contact the spring band (7) substantially tangentially.

## Revendications pour les Etats Contractants: AT, CH, FR, GB, Li, SE

1. Dispositif de maintien d'objet pour microscopes, dans lequel des porte-objets pour objets microscopiques (5; 15) sont serrés par leur côté avant contre des appuis fixes (2, 3, 4; 12, 13, 14) au moyen d'éléments de maintien élastiques (7; 20), caractérisé en ce que les éléments de maintien sont conformés de manière qu'ils soient écartés latéralement, contre la force élastique, lorsque le porte-objet (5; 15) est amené en direction des appuis (2, 3, 4; 12, 13, 14).

2. Dispositif de maintien d'objet selon la revendication 1, caractérisé en ce que le serrage est produit par un disque (20) qui est monté déplaçable contre une force élastique (19) dans le dispositif de maintien (11, 16, 17), de manière que les porte-objets (15) glissés dans le dispositif de maintien en direction des appuis (12, 13, 14) touchent le disque (20) essentiellement tangentiellement.

3. Dispositif de maintien d'objet selon la revendication 2, caractérisé en ce que le disque (20) est monté rotatif dans un trou oblong formant guide (21).

4. Dispositif de maintien d'objet selon les revendications 1—3, caractérisé en ce que le disque (20) est pressé contre les porte-objets (15) par un ressort en fil (19) appliqué tangentiellement contre le pourtour du disque ou contre son axe de rotation.

5. Dispositif de maintien d'objet selon la revendication 1, caractérisé en ce que le serrage est produit par un ressort à ruban (7) de forme courbe, dirigé par son côté convexe vers l'objet, qui est fixé par au moins une de ses extrémités au dispositif de manière que des porte-objets (5) introduits en direction des appuis (2, 3, 4) touchent le ressort à ruban (7) essentiellement tangentiellement.

6. Dispositif de maintien d'objet selon la revendication 1, caractérisé en ce que le serrage est produit par un levier à ressort de forme courbe, dirigé par son côté convexe vers l'objet dans une région d'appui, dont la zone de mouvement est limitée par une butée, de manière que les porte-objets introduits en direction des butées touchent le levier essentiellement tangentiellement.

## Revendications pour l'Etat Contractant: DE

1. Dispositif de maintien d'objet pour microscopes, dans lequel des porte-objets pour objets microscopiques (5; 15) sont serrés par leur côté avant contre des appuis fixes (2, 3, 4; 12, 13, 14) au moyen d'éléments de maintien élastiques (7; 20), lesdits éléments de maintien étant conformés de manière qu'ils soient écartés latéralement, contre la force élastique, lorsque le porte-objet (5; 15) est amené en direction des appuis (2, 3, 4; 12, 13, 14), caractérisé en ce que le serrage est produit par un disque (20) qui est monté déplaçable contre une force élastique (19) dans le dispositif de maintien (11, 16, 17), de manière que les porte-objets (15) glissés dans le dispositif de maintien en direction des appuis (12, 13, 14) touchent le disque (20) essentiellement tangentiellement.

2. Dispositif de maintien d'objet selon la revendication 1, caractérisé en ce que le disque (20) est monté rotatif dans un trou oblong formant guide (21).

3. Dispositif de maintien d'objet selon les revendications 1, 2, caractérisé en ce que le disque (20) est pressé contre les porte-objets (15) par un ressort en fil (19) appliqué tangentiellement contre le pourtour du disque ou contre son axe de rotation.

4. Dispositif de maintien d'objet pour microscopes, dans lequel des porte-objets pour objets microscopiques (5; 15) sont serrés par leur côté avant contre des appuis fixes (2, 3, 4; 12, 13, 14) au moyen d'éléments de maintien élastiques (7; 20), lesdits éléments de maintien étant conformés de manière qu'ils soient écartés latéralement, contre la force élastique, lorsque le porte-objet (5; 15) est amené en direction des appuis (2, 3, 4; 12, 13, 14), caractérisé en ce que le serrage est produit par un ressort à ruban (7) de forme courbe, dirigé par son côté convexe vers l'objet, qui est fixé par au moins une de ses extrémités au dispositif de manière que des porte-objets (5) introduits en direction des appuis (2, 3, 4) touchent le ressort à ruban (7) essentiellement tangentiellement.

Fig.1

Fig. 2